# EUROPEAN PATENT SPECIFICATION

(11) **EP 1 351 230 B1**
(45) Date of publication and mention of the grant of the patent: **13.06.2007**
(21) Application number: 03007465.2
(22) Date of filing: 04.04.2003
(51) Int. Cl.: G11B 7/00, G11B 7/24

(54) **Optical recording medium and method for optically recording information on the same**
Optisches Speichermedium und Verfahren zum optischen Speichern von Information auf demselben
Support d'enregistrement optique et méthode d'enregistrement optique d'informations sur ledit support

(30) Priority: 05.04.2002 JP 2002104317
(43) Date of publication of application: 08.10.2003
(73) Proprietor: TDK Corporation, Chuo-ku, Tokyo 103-8272 (JP)
(72) Inventor: Aoshima, Masaki, Tokyo 103-8272 (JP); Inoue, Hiroyasu, Tokyo 103-8272 (JP); Mishima, Koji, Tokyo 103-8272 (JP); Hirata, Hideki, Tokyo 103-8272 (JP); Utsunomiya, Hajime, Tokyo 103-8272 (JP)
(74) Representative: HOFFMANN EITLE

(56) References cited:
- EP-A- 0 474 311
- EP-A- 1 426 941
- EP-A- 1 457 977
- WO-A-01/93256
- PATENT ABSTRACTS OF JAPAN vol. 0144, no. 00 (P-1098), 29 August 1990 (1990-08-29) & JP 2 152029 A (DAICEL CHEM IND LTD), 12 June 1990 (1990-06-12)
- PATENT ABSTRACTS OF JAPAN vol. 0163, no. 06 (M-1276), 6 July 1992 (1992-07-06) & JP 4 086283 A (SHARP CORP), 18 March 1992 (1992-03-18)
- PATENT ABSTRACTS OF JAPAN vol. 012, no. 062 (P-670), 25 February 1988 (1988-02-25) & JP 62 204442 A (TOSHIBA CORP), 9 September 1987 (1987-09-09)

## Description

### BACKGROUND OF THE INVENTION

The present invention relates to an optical recording medium and a method for optically recording information in the optical recording medium and, particularly, to a write-once type optical recording medium which can be fabricated using materials that apply only light load to the environment and into which information can be recorded with high sensitivity and from which information can be reproduced with high sensitivity, and a method for optically recording information in the write-once type optical recording medium with high sensitivity.

### DESCRIPTION OF THE PRIOR ART

A write-once type optical recording medium is constituted so that information can be written once in a recording layer thereof. Illustrative examples of the write-once type optical recording medium include the CD-R, DVD-R, photo-CD and the like.

Such write-once type optical recording media require improvement not only in ability to record large amounts of information at high speed, high density and high sensitivity, but also in ability to store recorded information for a long time as initially recorded information, i.e., without degradation. Increasing concern about global atmospheric problems further makes it necessary to fabricate the write-once type optical recording media with materials which apply minimal load to the environment.

There are known a write-once type optical recording media having a recording layer containing an organic dye material as a primary component and a write-once type optical recording medium having a recording layer containing a metal element (or non-metal element) as a primary component. The former is currently the predominant type.

On the other hand, the need to record information at high density makes it necessary to record and read information using a short-wavelength laser beam such as a blue laser beam. However, no organic dye material enabling information to be recorded using a blue laser beam has yet been put to practical use.

Therefore, write-once type optical recording media having a recording layer containing a metal element as a primary component have been the subject of various studies regarding the design of the internal structure of the recording layer and other layers disposed in the vicinity thereof and also regarding methods for recording information therein.

Methods studied for recording information in a write-once type optical recording medium include, for example, a deformation method that changes the reflection coefficient of local regions of a recording layer (forms the recording layer with pits or bubbles or changes its surface shape) and a phase change method that changes the reflection coefficient or refractive index of a recording layer by changing it from crystal phase to amorphous phase

However, in the case of recording information in a write-once type optical recording medium using a deformation method or a phase change type method, the recording sensitivity is poor and information initially recorded degenerates, making it impossible to keep the recorded information for a long time.

Further, there has been also studied an inter-diffusion method that utilizes the thermal diffusion of an element upon irradiation with a laser beam to invert the concentration distribution of the element in local regions irradiated with the laser beam and the concentration distribution of the element in surrounding regions, thereby recording information by changing the reflection coefficient (as taught by, for example, Japanese Patent Application Laid Open No. 2000-187884).

In the case of recording information in a write-once optical recording medium using an inter-diffusion type method, it is possible to record information with higher sensitivity than by the deformation method or the phase change method but the recording speed is by no means satisfactory.

To the contrary, Japanese Patent Application Laid Open No. 62-204442 proposes an optical recording medium in which two recording layers containing different metal elements (or non-metal elements) as their primary components are disposed between two layers containing dielectric materials.

In the case where this optical recording medium is used as a write-once optical recording medium, information is recorded by projecting a laser beam onto local regions of the two recording layers to form a eutectic alloy containing the different elements constituting the respective recording layers and thus change the reflection coefficients of each pair of regions (this method is hereinafter referred to as the "eutectic crystallization method").

Therefore, since the recording layers are disposed between the two layers containing dielectric materials, when information is recorded using a laser beam, it is possible to prevent scattering of the materials forming the recording layers and formation of holes in the recording layers, whereby thermal deformation can be prevented. As a result, both the recorded-information storage characteristic and the reproduction sensitivity of the recorded information can be improved.

However, in the optical recording medium disclosed in Japanese Patent Application Laid Open No. 62-204442 and using the eutectic method, it is difficult to store the initially recorded information in the recording layers in a good condition over the long term.

Further, since the surface smoothness of this optical recording medium is not necessarily good, the initial recording characteristic may be poor.

EP-A-0 474 311 discloses an optical recording medium comprising a first thin film 3a (a first recording layer) and a second thin film 3b (a second recording layer) and a dielectric layer provided on a substrate 1. Upon irradiation with a laser beam, on the laser beam irradiated areas of the first and second thin films 3a and 3b a fusion-induced mixing phenomenon or diffusion occurs, and a guide groove 5a formed on the surface 4 of the substrate is simultaneously thermally deformed to a flat form.

WO 01/93256 discloses an optical recording medium provided, in this order, with a protective layer 46, a dielectric layer 44, a semi-reflecting layer 32 and an inorganic layer 30. Upon irradiation of this structure, the side of the multi-layered body, which is not protected by a dielectric layer, is deformed, so that data are recorded in the optical recording medium.

### SUMMARY OF THE INVENTION

It is therefore an object of the present invention to solve the problems of the above-described prior art and to provide an optical recording medium which has an excellent initial recording characteristic and can store recorded information in a good condition over the long term, and a method for optically recording information in the optical recording medium with high sensitivity.

The inventors of the present invention vigorously pursued a study for accomplishing the above object and, as a result, made the surprising discovery that when a laser beam is used to record information in a recording medium composed of a first recording layer containing an element selected from Si, Sn, Mg, In, Zn, Bi and Al as a primary component and a second recording layer containing Cu as a primary component, a mixed region including both the primary component element of the first recording layer and the primary component element of the second recording layer is formed to markedly change the region's reflection coefficient and enable information to be recorded with high sensitivity. They the further discovered that information initially recorded with high sensitivity in the recording medium can be stored for a long time by utilizing the large difference in reflection coefficient between the mixed region including the primary component element of the first recording layer and the primary component element of the second recording layer, and the other regions.

The above and other objects of the present invention can therefore be accomplished by an optical recording medium comprising in this order
i) a substrate (40),
ii) a second dielectric layer (22),
iii) in either order
   a first recording layer (11) containing as the primary component an element selected from Si, Sn, Mg, In, Zn, Bi and Al, and
   a second recording layer (12) located in the vicinity of the first recording layer, containing Cu as the primary component,
iv) a first dielectric layer (21),
v) a protective layer (30).

The above and other objects of the present invention can also be accomplished by a method for optically recording information in the optical recording medium of the present invention, which method comprises the step of irradiating via one of the substrate (40) and the protective layer (30) the first and the second recording layers (11, 12) with a laser beam having a predetermined power, thereby forming a region where the elements contained as the primary component in the first and the second recording layer, respectively, are mixed.

In the present invention, the statement that the first recording layer contains a certain element as a primary component means that the content of the element is maximum among the elements contained in the first recording layer, while the statement that the second recording layer contains Cu as a primary component means that the content of Cu is maximum among the elements contained in the second recording layer.

In the present invention, it is not absolutely necessary for the second recording layer to be in contact with the first recording layer and it is sufficient for the second recording layer to be so located in the vicinity of the first recording layer as to enable formation of a mixed region including the primary component element of the first recording layer and the primary component element of the second recording layer when the region is irradiated with a laser beam. Further, one or more other layers such as a dielectric layer may be interposed between the first recording layer and the second recording layer.

In the present invention, it is preferable to form the second recording layer so as to be in contact with the first recording layer.

In the present invention, the optical recording medium may include one or more recording layers containing an element selected from Si, Sn, Mg, In, Zn, Bi and Al as a primary component or one or more recording layers containing Cu as a primary element, in addition to the first recording layer and the second recording layer.

Although the reason why a mixed region including the primary component element of the first recording layer and the primary component element of the second recording layer can be formed when irradiated with a laser beam is not altogether clear, it is reasonable to conclude that the primary component elements of the first and second recording layers are partially or totally fused or diffused, thereby forming a region where the primary component elements of the first and second recording layers mix.

The reflection coefficient that the region thus formed by mixing the primary component elements of the first and second recording layers exhibits with respect to a laser beam for reproducing information and the reflection coefficient that other regions exhibit with respect to the laser beam for reproducing information are considerably different and, therefore, recorded information can be reproduced with high sensitivity by utilizing such large difference in the reflection coefficients.

Further, the inventors found that these elements apply only light load to the environment and that the recording layers including these elements have excellent surface smoothness.

The initial recording characteristic can be particularly improved in comparison with conventional optical recording media when the second recording layer containing Cu as a primary component is formed by a vacuum deposition process or a sputtering process because the surface smoothness thereof becomes very good. Since the recording layers of the optical recording medium according to the present invention therefore have excellent surface smoothness, it is possible to markedly improve the recording characteristic when information is recorded by a laser beam having a reduced spot diameter. Moreover, since Cu is quite inexpensive, the cost of the materials used to fabricate the optical recording medium can be minimized.

In the present invention, it is preferable for the first recording layer to contain an element selected from Si, Mg, Al and Sn as a primary component. In the case where the first recording layer contains an element selected from Si, Mg, Al and Sn as a primary component, it is possible to further improve the C/N ratio of the reproduced signal.

In the present invention, it is preferable to add at least one element selected from Al, Si, Zn, Mg, Au, Sn, Ge, Ag, P, Cr, Fe and Ti to the second recording layer and it is more preferable to add at least one element selected from Al, Zn, Sn and Au to the second recording layer.

In the case where at least one element selected from the group consisting of Al, Si, Zn, Mg, Au, Sn, Ge, Ag, P, Cr, Fe and Ti or at least one kind of element selected from the group consisting of Al, Zn, Sn and Au is added to the second recording layer in this manner, it is possible to markedly improve the stability of the second recording layer against oxidation or sulfurization and to effectively prevent degradation of the appearance of the optical recording medium, such as by peeling of the second recording layer and the like owing to corrosion of Cu contained in the second recording layer as a primary component, and change in the reflection coefficient of the optical recording medium during long storage.

In the present invention, the optical recording medium further comprises a first dielectric layer between the protective layer and the one of the first and second recording layers located on the side of the protective layer and a second dielectric layer between the substrate and the other of the first and second recording layers.

In this case, it is possible to reliably prevent the substrate or the protective layer from being deformed by heat when information is recorded therein by irradiation with a laser beam. Further, since it is possible to prevent Cu contained in the second recording layer as a primary component from being corroded, recorded information can be more effectively prevented from being degraded over the long term.

In the present invention, it is preferable for the protective layer to have light transmittance ability and the first recording layer is preferably disposed on the side of the protective layer and the second recording layer is preferably disposed on the side of the substrate. In such a case, information can be recorded by a laser beam of lower power.

In the present invention, it is preferable for the protective layer to have light transmittance ability and the optical recording medium to further comprise a reflective layer between the substrate and the second dielectric layer.

Also , it is preferable for the substrate to have light transmittance ability and the first recording layer is preferably disposed on the side of the substrate and the second recording layer is preferably disposed on the side of the protective layer.

Furthermore, it is preferable for the substrate to have light transmittance ability and the optical recording medium to further comprise a reflective layer between the substrate and the first dielectric layer. In all of these three cases, it is possible to increase the difference in reflection coefficient between a recorded region and an unrecorded region by a multiple interference effect, thereby obtaining a higher reproduced signal (C/N ratio).

In the present invention, when the second recording layer is formed in contact with the first recording layer, it is preferable for the first recording layer to be disposed on the side of the protective layer and for the second recording layer to be disposed on the side of the substrate. This enables an improvement in the surface smoothness of the first recording layer formed in contact with the second recording layer because the surface smoothness of the second recording layer containing Cu as a primary component is excellent.

### BRIEF DESCRIPTION OF THE DRAWINGS

Figure 1 (a) is a schematic partially cutaway perspective view showing an optical recording medium which is a preferred embodiment of the present invention.
Figure 1 (b) is a schematic enlarged cross-sectional view showing a section indicated by the symbol *R* in Figure 1 (a).
Figure 2 is a schematic enlarged cross-sectional view showing the section indicated by the symbol *R* in Figure 1 after irradiation with a laser beam.
Figure 3 is a schematic enlarged cross-sectional view showing an optical recording medium which is another preferred embodiment of the present invention.
Figure 4 is a schematic enlarged cross-sectional view showing an optical recording medium which is another preferred embodiment of the present invention.
Figure 5 is a schematic enlarged cross-sectional view showing an optical recording medium which is another preferred embodiment of the present invention.
Figure 6 (a) is a graph showing how rate of reflection coefficient reduction varies with amount of additive in an optical recording medium fabricated in accordance with Working Example 11.
Figure 6 (b) is a graph showing how noise level immediately after recording information and after storage test vary with amount of additive in an optical recording medium fabricated in accordance with Working Example 11.
Figure 7 (a) is a graph showing how rate of reflection coefficient reduction varies with amount of additive in an optical recording medium fabricated in accordance with Working Example 12.
Figure 7 (b) is a graph showing how noise level immediately after recording information and after storage test vary with amount of additive in an optical recording medium fabricated in accordance with Working Example 12.
Figure 8 (a) is a graph showing how rate of reflection coefficient reduction varies with amount of additive in an optical recording medium fabricated in accordance with Working Example 13.
Figure 8 (b) is a graph showing how noise level immediately after recording information and after storage test vary with amount of additive in an optical recording medium fabricated in accordance with Working Example 13.
Figure 9 (a) is a graph showing how rate of reflection coefficient reduction varies with amount of additive in an optical recording medium fabricated in accordance with Working Example 14.
Figure 9 (b) is a graph showing how noise level immediately after recording information and after storage test vary with amount of additive in an optical recording medium fabricated in accordance with Working Example 14.
Figure 10 (a) is a graph showing how rate of reflection coefficient reduction varies with amount of additive in an optical recording medium fabricated in accordance with Working Example 15.
Figure 10 (b) is a graph showing how noise level immediately after recording information and after a storage test vary with amount of additive in an optical recording medium fabricated in accordance with Working Example 15.

The above and other objects and features of the present invention will become apparent from the following description and the corresponding drawings.

### DESCRIPTION OF THE PREFERRED EMBODIMENTS

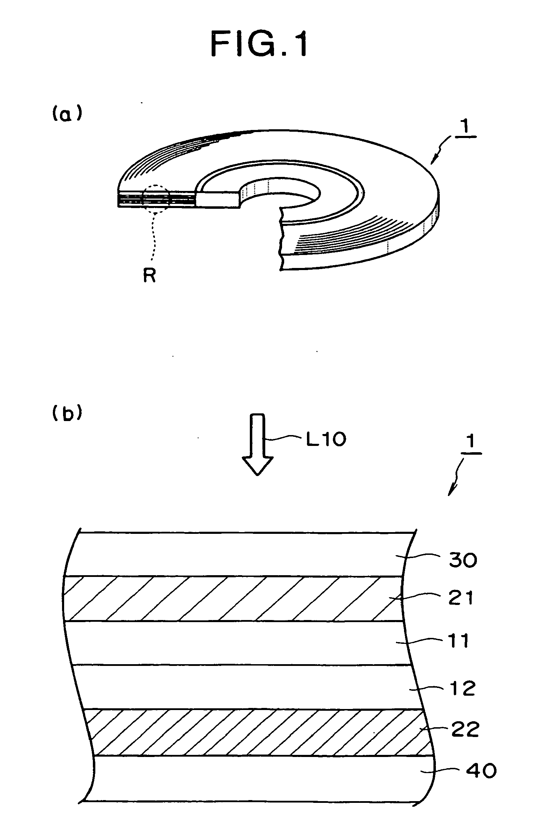

As shown in Figure 1 (b), an optical recording medium in a preferred embodiment of the present invention includes a substrate 40, a protective layer 30, a first recording layer 11 and a second recording layer 12 formed between the substrate 40 and the protective layer 30, and a first dielectric layer 21 is formed between the protective layer 30 and the first recording layer 11 and a second dielectric layer 22 is formed between the second recording layer 12 and the substrate 40.

The substrate 40 serves as a support for supporting the second dielectric layer 22, the second recording layer 12, the first recording layer 11, the first dielectric layer 21 and the protective layer 30. The material used to form the substrate 40 is not particularly limited insofar as the substrate 40 can serve as the support for the above-mentioned layers. The substrate 40 can be formed of glass, ceramic, resin or the like. Among these, resin is preferably used for forming the substrate 40 since resin can be easily shaped. Illustrative examples of resins suitable for forming the substrate 40 include polycarbonate resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin is most preferably used for forming the substrate 40 from the viewpoint of easy processing, optical characteristics and the like.

The thickness of the substrate 40 is not particularly limited but is preferably from 0.05 mm to 2.4 mm. If the substrate 40 is thinner than 0.05 mm, it is difficult to shape. On the other hand, if the substrate 40 is thicker than 2.4 mm, the weight of the optical recording medium 1 becomes great, making it difficult to handle. The shape of the substrate 40 is not particularly limited but is normally disk-like, card-like or sheet-like.

The first dielectric layer 21 and the second dielectric layer 22 serve to protect the first recording layer 11 and the second recording layer 12. Degradation of optically recorded information can be prevented over a long period by the first dielectric layer 21 and the second dielectric layer 22. Further, since the second dielectric layer 22 also serves to prevent the substrate 40 and the like from being deformed by heat, it is possible to effectively prevent jitter and the like from becoming worse due to the deformation of the substrate 40 and the like.

The dielectric material used to form the first dielectric layer 21 and the second dielectric layer 22 is not particularly limited insofar as it is transparent and the first dielectric layer 21 and the second dielectric layer 22 can be formed of a dielectric material containing oxide, sulfide, nitride or a combination thereof, for example, as a primary component. More specifically, in order to prevent the substrate 40 and the like from being deformed by heat and thus protect the first recording layer 11 and the second recording layer 12, it is preferable for the first dielectric layer 21 and the second dielectric layer 22 to contain at least one kind of dielectric material selected from the group consisting of Al₂O₃, AlN, ZnO, ZnS, GeN, GeCrN, CeO, SiO, SiO₂, SiN and SiC as a primary component and it is more preferable for the first dielectric layer 21 and the second dielectric layer 22 to contain ZnS· SiO₂ as a primary component.

The first dielectric layer 21 and the second dielectric layer 22 may be formed of the same dielectric material or of different dielectric materials. Moreover, at least one of the first dielectric layer 21 and the second dielectric layer 22 may have a multi-layered structure including a plurality of dielectric films.

In this specification, the statement that a dielectric layer contains a certain dielectric material as a primary component means that the dielectric material is maximum among dielectric materials contained in the dielectric layer. ZnS · SiO₂ means a mixture of ZnS and SiO₂.

The thickness of the first dielectric layer 21 and the second dielectric layer 22 is not particularly limited but is preferably from 3 nm to 200 nm. If the first dielectric layer 21 or the second dielectric layer 22 is thinner than 3 nm, it is difficult to obtain the above-described advantages. On the other hand, if the first dielectric layer 21 or the second dielectric layer 22 is thicker than 200 nm, it takes a long time to form the first and dielectric layers 21 and 22, thereby lowering the productivity of the optical recording medium 1, and cracks may be generated in the optical recording medium 1 owing to stress present in the first and/or second dielectric layer 22.

The protective layer 30 serves to prevent the first recording layer 11 and the second recording layer 12 from being damaged when the optical recording medium 1 is in use or storage.

The optical recording medium 1 according to this embodiment is constituted so that information is recorded by irradiating the first recording layer 11 and the second recording layer 12 with a laser beam via the protective layer 30 and, therefore, the protective layer 30 must have light transmittance ability. The material used to form the protective layer 30 is not particularly limited insofar as it is transparent and the protective layer 30 can be formed by curing ultraviolet curing resin, for example. Illustrative examples of ultraviolet curing resins include SD698 (product designation) manufactured by Dainippon Printing Co., Ltd. Instead of forming the protective layer 30 by curing an ultraviolet curing resin, the protective layer 30 may be formed using a light transmittable resin sheet and any of various kinds of bonding and adhesive agents.

The thickness of the protective layer 30 is not particularly limited but is preferably from 1 µm to 200 µm. If the protective layer 30 is thinner than 1 µm, it is difficult to protect the first recording layer 11 and the second recording layer 12 in a desired manner. On the other hand, if the protective layer 30 is thicker than 200 pm, it is difficult to control the thickness of the protective layer 30 and the overall mechanical accuracy of the optical recording medium 1.

The first recording layer 11 and the second recording layer 12 are adapted for recording information therein. In this embodiment, the first recording layer 11 is disposed on the side of the protective layer 30 and the second recording layer 12 is disposed on the side of the substrate 40. This arrangement of the first recording layer 11 and the second recording layer 12 is advantageous in that information can be recorded with a laser beam having lower power.

In order to considerably improve the C/N ratio of the reproduced signal, it is preferable for the first recording layer 11 to contain an element selected from Si, Mg, Al and Sn as a primary component and more preferable for the first recording layer 11 to contain Si as a primary component.

Cu contained in the second recording layer 12 as a primary component quickly mixes with the element contained in the first recording layer 11 when irradiated with a laser beam, thereby enabling information to be quickly recorded in the first recording layer 11 and the second recording layer 12.

In order to improve the recording sensitivity of the first recording layer 11, one or more elements selected from a group consisting of Mg, Al, Cu, Ag and Au may be further added to the first recording layer 11.

In order to improve the storage reliability and the recording sensitivity of the second recording layer 12, at least one element selected from the group consisting of Al, Si, Zn, Mg, Au, Sn, Ge, Ag, P, Cr, Fe and Ti may be further added to the second recording layer 12.

Among these elements, it is preferable to add Al, Si, Zn, Mg and/or Au to the second recording layer 12. In particular, when Al is added to the second recording layer 12, it is possible to markedly improve the stability of the second recording layer 12 to oxidation or sulfurization and to effectively prevent degradation of the appearance of the optical recording medium 1 by peeling of the second recording layer 12 caused by corrosion of Cu contained in the second recording layer 12 as a primary component and change in the reflection coefficient of the optical recording medium 1 over long storage.

On the other hand, from the viewpoint of improving recording sensitivity, it is preferable to add at least one element selected from the group consisting of Au, Zn and Sn to the second recording layer 12. Particularly, in the case where Au is added to the second recording layer 12, it is possible to markedly increase the recording sensitivity of the second recording layer 12.

It is most preferable to add Al and Au to the second recording layer 12 in order to improve both the storage reliability and the recording sensitivity of the second recording layer 12.

The amount of the element (elements) added to the second recording layer 12 is preferably equal to or more than 1 atomic % and less than 50 atomic %. When Al is added to the second recording layer 12, it is preferable to add Al so that the amount thereof is equal to or more than 5 atomic % and less than 45 atomic %, and when Zn is added to the second recording layer 12, it is preferable to add Zn so that the amount thereof is equal to or more than 2 atomic % and less than 45 atomic %. On the other hand, when Mg is added to the second recording layer 12, it is preferable to add Mg so that the amount thereof is equal to or more than 5 atomic % and less than 30 atomic %, and when Au is added to the second recording layer 12, it is preferable to add Au so that the amount thereof is equal to or more than 5 atomic % and less than 45 atomic %. Further, when Si is added to the second recording layer 12, it is preferable to add Si so that the amount thereof is equal to or more than 2 atomic % and less than 30 atomic %.

The thickness of the first recording layer 11 and the second recording layer 12 is not particularly limited insofar as the element contained in the first recording layer 11 as a primary component and the element contained in the second recording layer 12 as a primary component at a region irradiated with a laser beam L10 are quickly fused or diffused to quickly form a region where the primary component element of the first recording layer 11 and the primary component element of the second recording layer 12 are mixed, but the total thickness of the first recording layer 11 and the second recording layer 12 is preferably equal to or less than 100 nm and more preferably equal to or less than 50 nm.

When the total thickness of the first recording layer 11 and the second recording layer 12 exceeds 100 nm, the mixing rate of the primary component element of the first and second recording layers 11 and 12 is low and it becomes difficult to record information at high speed.

On the other hand, the total thickness of the first recording layer 11 and the second recording layer 12 is preferably equal to or larger than 2 nm. If the total thickness of the first and second recording layers 11 and 12 is less than 2 nm, the change in reflection coefficient between before and after irradiation with the laser beam L10 is small so that a reproduced signal having high strength cannot be obtained.

The individual thicknesses of the first recording layer 11 and the second recording layer 12 are not particularly limited but in order to considerably improve the recording sensitivity and greatly increase the change in reflection coefficient between before and after irradiation with the laser beam L10, the thickness of the first recording layer 11 is preferably from 1 nm to 30 nm and the thickness of the second recording layer 12 is preferably from 1 nm to 30 nm. Further, it is preferable to define the ratio of the thickness of the first recording layer 11 to the thickness of the second recording layer (thickness of first recording layer 11 / thickness of second recording layer 12) to be from 0.2 to 5.0.

The optical recording medium 1 having the above-described configuration can, for example, be fabricated in the following manner.

The second dielectric layer 22 is first formed on the substrate 40, which is formed in advance with pre-grooving.

The second dielectric layer 22 can be formed by a gas phase growth process using chemical species containing elements for forming the second dielectric layer 22. Illustrative examples of the gas phase growth processes include vacuum deposition process, sputtering process and the like.

The second recording layer 12 is then formed on the second dielectric layer 22. The second recording layer 12 can be also formed by a gas phase growth process using chemical species containing elements for forming the second recording layer 12.

The first recording layer 11 is further formed on the second recording layer 12. The first recording layer 11 can be also formed by a gas phase growth process using chemical species containing elements for forming the first recording layer 11.

Since the second recording layer 12 contains Cu as a primary component, the second recording layer 12 has excellent surface smoothness and, therefore, the first recording layer 11 can be formed on a base having excellent surface smoothness.

The first dielectric layer 21 is then formed on the first recording layer 11. The first dielectric layer 21 can be also formed by a gas phase growth process using chemical species containing elements for forming the first dielectric layer 21.

Finally, the protective layer 30 is formed on the first dielectric layer 21. The protective layer 30 can be formed by dissolving acrylic ultraviolet curing resin or epoxy ultraviolet curing resin in a solvent to prepare a resin solution and applying the resin solution on the first dielectric layer 21 by a spin coating process.

Thus, the optical recording medium 1 was fabricated.

Information is recorded in the optical recording medium 1 of the above-described configuration, in the following manner, for example.

As shown in Figure 1 (a), the first recording layer 11 and the second recording layer 12 are first irradiated via the protective layer 30 with a laser beam L10 having predetermined power.

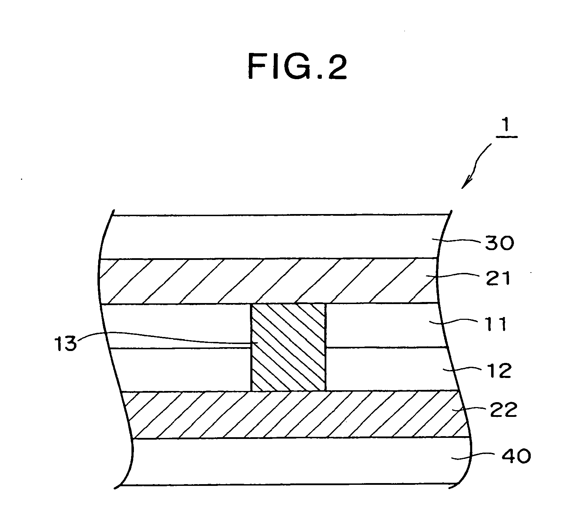

As shown in Figure 2, this results in formation at the region irradiated with the laser beam L10 of a mixed region 13 composed of a mixture of the primary component element of the first recording layer 11 and the primary component element of the second recording layer 12.

It is preferable to employ a laser beam L10 having a wavelength of 250 nm to 900 nm for optical recording.

Further, in order to quickly mix the primary component element of the first recording layer 11 and the primary component element of the second recording layer 12 and form the mixed region 13, it is preferable to set the power of the laser beam L10 to be equal to or higher than 1.5 mW at the surface of the protective layer 30.

When the primary component elements of the first recording layers 11 and 12 are mixed, the reflection coefficient of the region markedly changes. Since the reflection coefficient of the thus formed mixed region 13 is therefore greatly different from that of the region surrounding the mixed region 13, it is possible to obtain a high reproduced signal (C/N ratio) when optically recorded information is reproduced.

When the laser beam L10 is projected, the first recording layer 11 and the second recording layer 12 are heated by the laser beam L10. In this embodiment, however, the first dielectric layer 21 and the second dielectric layer 22 are disposed outward of the first recording layer 11 and the second recording layer 12. Deformation of the recording layer 11 and the second recording layer 12 by heat is therefore effectively prevented.

Since the second recording layer 12 contains Cu as a primary component, the second recording layer 12 has excellent surface smoothness and, therefore, it is possible to markedly improve the recording characteristic, particularly when information is recorded by a laser beam L10 having a reduced spot diameter.

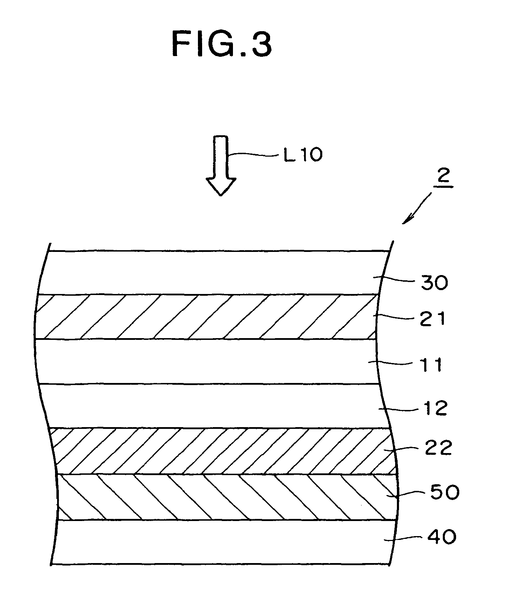

Figure 3 is a schematic enlarged cross-sectional view showing an optical recording medium which is another preferred embodiment of the present invention.

As shown in Figure 3, the optical recording medium 2 according to this embodiment has the same configuration as that of the optical recording medium 1 shown in Figure 1, except that it further includes a reflective layer 50 between the substrate 40 and the second dielectric layer 22.

The reflective layer 50 is provided in order to increase the difference in reflection coefficient between a recorded region and an unrecorded region by a multiple interference effect when the laser beam L10 is used to optically record information in the first recording layer 11 and the second recording layer 12, thereby obtaining a higher reproduced signal (C/N ratio).

The material used to form the reflective layer 50 is not particularly limited insofar as it can reflect light, and the reflective layer 50 can be formed of Mg, Al, Ti, Cr, Fe, Co, Ni, Cu, Zn, Ge, Ag, Pt, Au and the like. Among these materials, it is preferable to form the reflective layer 50 of a metal material having a high reflection characteristic, such as Al, Au, Ag, Cu or alloy containing at least one of these metals, such as alloy of Al and Ti.

The optical recording medium 2 according to this embodiment can be fabricated similarly to the optical recording medium 1 described above, except for the reflective layer 50. The reflective layer 50 can be formed by, for example, a gas phase growth process using chemical species containing elements for forming the reflective layer 50.

Further, information can be recorded in the optical disk 2 according to this embodiment in the same way as information is recorded in the optical disk 1 shown in Figure 1.

In this embodiment, since the optical recording medium 2 includes the first recording layer 11 and the second recording layer 12 formed in the same manner as those of the optical recording medium 1 shown in Figures 1 and 2, when the laser beam L10 is projected onto the optical recording medium 2, the primary component element of the first recording layer 11 and the primary component element of the second recording layer 12 mix at the region irradiated with the laser beam L10. Information can therefore be recorded in the optical recording medium 2 at a high speed and with high sensitivity.

In this embodiment, since the optical recording medium 2 includes the reflective layer 50 between the substrate 40 and the second dielectric layer 22, the difference in reflection coefficient between a recorded region and an unrecorded region is increased by a multiple interference effect when the laser beam L10 is used to optically record information in the first recording layer 11 and the second recording layer 12, whereby a higher reproduced signal (C/N ratio) can be obtained.

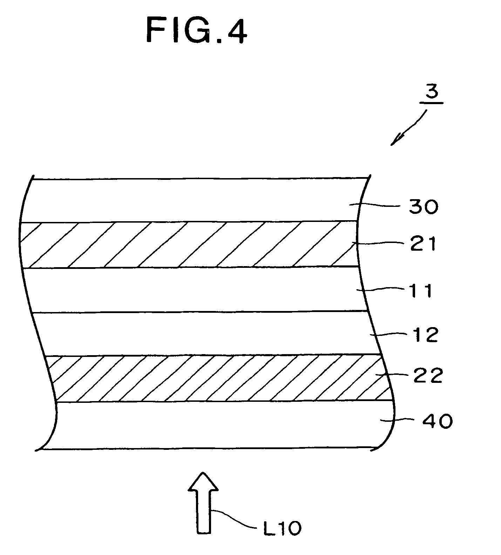

Figure 4 is a schematic enlarged cross-sectional view showing an optical recording medium which is a further preferred embodiment of the present invention.

The optical recording medium 3 according to this embodiment has the same configuration as that of the optical recording medium 1 shown in Figure 1, except that the substrate 40 has light transmittance ability.

In this embodiment, it is sufficient for the substrate 40 of the optical recording medium 3 to have light transmittance ability and the substrate 40 may be formed of the same material as used to form the substrate 40 of the optical recording medium 1 shown in Figure 1 or the same material as used to form the protective layer 30 of the optical recording medium 1 shown in Figure 1.

It is preferable for the substrate 40 of the optical recording medium 3 according to this embodiment to have the same thickness as that of the substrate 40 of the optical recording medium 1 shown in Figure 1.

When information is to be recorded in the optical recording medium 3 having the above described configuration, the second recording layer 12 and the first recording layer 11 are irradiated via the substrate 40 with the laser beam L10.

In this embodiment, since the optical recording medium 3 includes the first recording layer 11 and the second recording layer 12 formed in the same manner as those of the optical recording medium 1 shown in Figures 1 and 2, when the laser beam L10 is projected onto the optical recording medium 3, the primary component element of the first recording layer 11 and the primary component element of the second recording layer 12 mix at the region irradiated with the laser beam L10 and, therefore, information can be recorded in the optical recording medium 3 at a high speed and with high sensitivity.

Further, similarly to the optical recording medium 1 shown in Figure 1, a high reproduced signal (C/N ratio) can be obtained when optically recorded information is reproduced.

Moreover, in the optical recording medium 3 according to this embodiment, it is possible to effectively prevent degradation of optically recorded information over the long term.

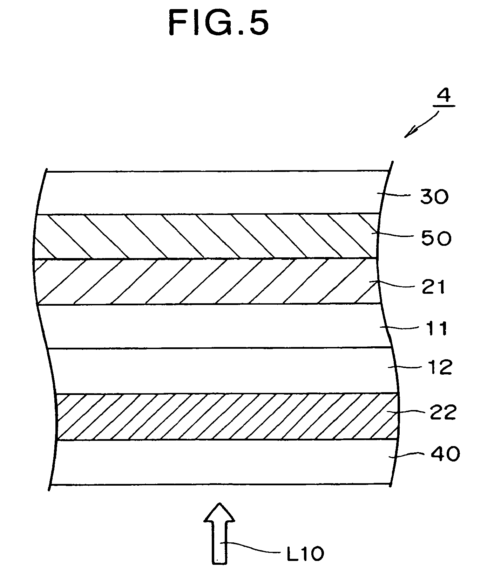

Figure 5 is a schematic enlarged cross-sectional view showing an optical recording medium which is a further preferred embodiment of the present invention.

The optical recording medium 4 according to this embodiment has the same configuration as that of the optical recording medium 3 shown in Figure 4, except that it includes the reflective layer 50 between the protective layer 30 and the first dielectric layer 21.

When information is to be recorded in the optical recording medium 4 having the above described configuration, the second recording layer 12 and the first recording layer 11 are irradiated via the substrate 40 with a laser beam L10.

In this embodiment, since the optical recording medium 4 includes the first recording layer 11 and the second recording layer 12 formed in the same manner as those of the optical recording medium 1 shown in Figures 1 and 2, when the laser beam L10 is projected onto the optical recording medium 4, the primary component element of the first recording layer 11 and the primary component element of the second recording layer 12 mix at the region irradiated with the laser beam L10 and, therefore, information can be recorded in the optical recording medium 4 at a high speed and with high sensitivity.

Further, similarly to the optical recording medium 1 shown in Figure 1, a high reproduced signal (C/N ratio) can be obtained when optically recorded information is reproduced.

Moreover, in the optical recording medium 4 according to this embodiment, it is possible to effectively prevent degradation of optically recorded information over the long term. Furthermore, since the optical recording medium 4 according to this embodiment includes the reflective layer 50 between the protective layer 30 and the first dielectric layer 21, similarly to the optical recording medium 2 shown in Figure 3, the difference in reflection coefficient between a recorded region and an unrecorded region can be increased by a multiple interference effect when the laser beam 10 is used to optically record information in the first recording layer 11 and the second recording layer 12, whereby a higher reproduced signal (C/N ratio) can be obtained.

### WORKING EXAMPLES AND COMPARATIVE EXAMPLES

Hereinafter, working examples and comparative examples will be set out in order to further clarify the advantages of the present invention.

### Working Example 1

An optical recording medium having the same configuration as that of the optical recording medium 1 shown in Figure 1 was fabricated in the following manner.

A polycarbonate substrate having a thickness of 1.1 mm and a diameter of 120 mm was first set on a sputtering apparatus. Then, a second dielectric layer containing a mixture of ZnS and SiO₂ and having a thickness of 60 nm, a second recording layer containing Cu as a primary component and having a thickness of 6 nm, a first recording layer containing Si as a primary component and having a thickness of 6 nm and a first dielectric layer containing the mixture of ZnS and SiO₂ and having a thickness of 60 nm were sequentially formed on the polycarbonate substrate using the sputtering process.

Further, the first dielectric layer was coated using the spin coating method with a resin solution prepared by dissolving acrylic ultraviolet curing resin in a solvent to form a coating layer and the coating layer was irradiated with ultraviolet rays, thereby curing the acrylic ultraviolet curing resin to form a protective layer having a thickness of 100 µm.

The mole ratio of ZnS to SiO₂ in the mixture of ZnS and SiO₂ contained in the first dielectric layer and the second dielectric layer was 80:20.

A total of five optical recording media were fabricated in this manner.

### Working Example 3

An optical recording medium was fabricated in the manner of Working Example 1, except that a first recording layer containing Sn as the primary component was formed.

A total of five optical recording media were fabricated in this manner.

### Working Example 4

An optical recording medium was fabricated in the manner of Working Example 1, except that a first recording layer containing Mg as a primary component was formed.

A total of five optical recording media were fabricated in this manner.

### Working Example 5

An optical recording medium was fabricated in the manner of Working Example 1, except that a first recording layer containing A1 as the primary component was formed.

A total of five optical recording media were fabricated in this manner.

### Working Example 6

An optical recording medium was fabricated in the manner of Working Example 1, except that a first recording layer containing Cu as a primary component and a second recording layer containing Si as a primary component were formed.

A total of five optical recording media were fabricated in this manner.

### Working Example 8

An optical recording medium was fabricated in the manner of Working Example 1, except that a first recording layer containing Cu as a primary component and a second recording layer containing Sn as a primary component were formed.

A total of five optical recording media were fabricated in this manner.

### Working Example 9

An optical recording medium was fabricated in the manner of Working Example 1, except that a first recording layer containing Cu as a primary component and a second recording layer containing Mg as a primary component were formed.

A total of five optical recording media were fabricated in this manner.

### Working Example 10

An optical recording medium was fabricated in the manner of Working Example 1, except that a first recording layer containing Cu as a primary component and a second recording layer containing Al as a primary component were formed.

A total of five optical recording media were fabricated in this manner.

### Comparative Example 1

An optical recording medium was fabricated in the manner of Working Example 1, except that a first recording layer containing C as a primary component was formed.

A total of five optical recording media were fabricated in this manner.

### Comparative Example 2

An optical recording medium was fabricated in the manner of Working Example 1, except that a first recording layer containing Cu as a primary component and a second recording layer containing C as a primary component were formed.

A total of five optical recording media were fabricated in this manner.

Information was recorded in the optical recording media fabricated in Working Examples 1 to 10 and Comparative Examples 1 and 2 in the following manner.

Specifically, the five optical recording media fabricated in each of Working Examples 1 to 10 and Comparative Examples 1 and 2 were sequentially set in a DDU1000 optical recording medium evaluation apparatus manufactured by Pulstec Industrial Co., Ltd. and information was optically recorded therein under the following conditions.

A blue laser beam having a wavelength of 405 nm was employed as the laser beam for recording information and the laser beam was condensed onto each of the optical recording media via the protective layer using an objective lens whose numerical aperture was 0.85, and information was optically recorded therein under the following recording signal conditions.

The optical recording of information was conducted by varying the power of the laser beam for each optical recording medium of the respective Working Examples and Comparative Examples.

The recording signal conditions were as follows.
Modulation Code: (1.7) RLL
Channel Bit Length: 0.12 µm
Recording Linear Velocity: 5.3 m/sec
Channel Clock: 66 MHz
Recording Signal: 8 T

Information recorded in each of the optical recording media was then reproduced using the optical recording medium evaluation apparatus mentioned above and the C/N ratio of the reproduced signal was measured. When information was reproduced, the wavelength of the laser beam was set at 405 nm, the numerical aperture of the objective lens was set at 0.85 and the power of the laser beam was set at 0.3 mW.

The reproduced signal having highest C/N ratio was obtained for each of the optical recording media when information was recorded using the laser beam having the following power. The power of the laser beam was defined as the power of the laser beam on the surface of the protective layer.
Working Example 1: 6.0 mW
Working Example 3: 6.7 mW
Working Example 4: 7.0 mW (*)
Working Example 5: 7.0 mW (*)
Working Example 6: 6.7 mW
Working Example 8: 5.3 mW
Working Example 9: 7.0 mW (*)
Working Example 10: 7.0 mW (*)
Comparative Example 1: 7.0 mW (*)
Comparative Example 2: 7.0 mW (*)

The maximum power of the laser beam of the optical recording medium evaluating apparatus used for the experiment was 7.0 mW. Therefore, when the C/N ratio did not saturate even though the power of the laser beam was increased up to 7.0 mW, it was deemed that the power of the laser at which the reproduced signal having the maximum C/N ratio would be obtained exceeded 7.0 mW. This is indicated by designating the power value of the laser beam as 7.0 mW affixed with an asterisk.

The relationship between the power of the laser beam and the C/N ratio of the reproduced signal of each of the optical recording media in Working Example 1 is shown in TABLE 1.

**TABLE 1**

| | Total thickness of first and second recording layers (nm) | Power of laser beam when recording (mW) | C/N ratio of reproduced signal (8T) (dB) |
|---|---|---|---|
| Working Example 1 | 12 | 3.0 | 49.3 |
| Working Example 1 | 12 | 4.0 | 54.2 |
| Working Example 1 | 12 | 5.0 | 55.2 |
| Working Example 1 | 12 | 6.0 | 55.7 |
| Working Example 1 | 12 | 7.0 | 55.6 |

Optical recording media were further fabricated in accordance with Working Examples 1 to 10 and Comparative Examples 1 and 2 and information was optically recorded in a similar manner to the above using a laser beam having the power at which the reproduced signal having the maximum C/N ratio was obtained.

The C/N ratio of the signal reproduced immediately after recording of information was measured for each of the optical recording media.

The measurement results are shown in Table 2.

**TABLE 2**

| | First recording layer | Second recording layer | 8T C/N (dB) | Results of measurement |
|---|---|---|---|---|
| Working Example 1 | Si | Cu | 55.7 | ⊚ |
| Working Example 3 | Sn | Cu | 31.4 | ⊚ |
| Working Example 4 | Mg | Cu | 18.4 | ○ |
| Working Example 5 | Al | Cu | 18.7 | ○ |
| Working Example 6 | Cu | Si | 51.0 | ⊚ |
| Working Example 8 | Cu | Sn | 43.5 | ⊚ |
| Working Example 9 | Cu | Mg | 17.8 | O |
| Working Example 10 | Cu | Al | 19.8 | O |
| Comparative Example 1 | C | Cu | Unmeasurable | x |
| Comparative Example 2 | Cu | C | Unmeasurable | x |

As apparent from Table 1, it was found that the C/N ratio of the signal reproduced immediately after recording of information was of a measurable level in each of the optical recording media fabricated in accordance with Working Examples 1 to 10. In each of the optical recording media fabricated in accordance with Working Examples 1 to 3 and Working Examples 6 to 8, the C/N ratio of the signal reproduced immediately after recording of information was particularly high, greater than 30 dB, and the recording and reproducing characteristics thereof were excellent.

To the contrary, in each of the optical recording media fabricated in accordance with Comparative Examples 1 and 2, it was found that the C/N ratio of the signal reproduced immediately after recording of information could not be measured and it was impossible to record and reproduce information.

Further, the noise level and reflection coefficient of an unrecorded region of the optical recording medium fabricated in accordance with Working Example 1 and in which the signal reproduced immediately after recording of information was maximum were measured.

Then, in order to determine the reliability of the optical recording medium in the environment where it would be actually used, it was held in a much severer environment than the severest it would be expected to encounter in actual application. Specifically, the optical recording medium fabricated in accordance with Working Example 1 was subjected to a storage test in which it was held at a temperature of 80 °C and relative humidity of 85 % for 50 hours. Following this test, the noise level and reflection coefficient of an unrecorded region were again measured and the rate of reflection coefficient reduction was calculated.

The measurement results are shown in Table 3.

**TABLE 3**

| Noise level (dBm) | Initial value | -64.1 |
|---|---|---|
| | After storage test | -57.6 |
| Rate of reflection coefficient reduction | | 27% |

As apparent from Table 3, it was found that when the optical recording medium fabricated in accordance with Working Example 1 was held at a temperature of 80 °C and relative humidity of 85 % for 50 hours, its noise level increased by 6.5 dBm and its unrecorded region reflection coefficient decreased by 27 %. Further, when the appearance of the optical recording medium was examined, it was found that the second recording layer containing Cu as a primary component was peeled off from the second dielectric layer. It can be considered that the increase in the noise level, the decrease in the reflection coefficient and the peeling of the second recording layer containing Cu as a primary component were caused by corrosion of Cu contained in the second recording layer as a primary component.

Although such an increase in noise level and decrease in reflection coefficient do not cause the error rate of a reproduced signal to increase extremely in practical use, and there are few practical problems, it is desirable to suppress these changes as much as possible. On the other hand, as explained above, since the storage test was conducted by holding the optical recording medium in an environment much severer than the severest actual environment in which it can be expected to be utilized, it can be considered that the optical recording medium fabricated in accordance with Working Example 1 would not incur peeling of the second recording layer containing Cu as a primary component in an actual utilization environment. However, for ensuring high storage reliability, it is desirable to prevent the second recording layer containing Cu as a primary component from being peeled during such a storage test.

Therefore, the relationship between the storage reliability of an optical recording medium and the kinds and amounts of additives was examined by adding various additives to the second recording layer containing Cu as a primary component.

### Working Example 11

An optical recording medium having the same configuration as that of the optical recording medium 2 shown in Figure 2 was fabricated in the following manner.

A polycarbonate substrate having a thickness of 1.1 mm and a diameter of 120 mm was first set on a sputtering apparatus. Then, a reflective layer including an alloy containing Ag as a primary component and having a thickness of 100 nm, a second dielectric layer containing a mixture of ZnS and SiO₂ and having a thickness of 28 nm, a second recording layer containing Cu as a primary component and Al as an additive and having a thickness of 5 nm, a first recording layer containing Si as a primary component and having a thickness of 5 nm and a first dielectric layer containing a mixture of ZnS and SiO₂ and having a thickness of 22 nm were sequentially formed on the polycarbonate substrate using the sputtering process.

Further, the first dielectric layer was coated using the spin coating method with a resin solution prepared by dissolving acrylic ultraviolet curing resin in a solvent to form a coating layer and the coating layer was irradiated with ultraviolet rays, thereby curing the acrylic ultraviolet curing resin to form a protective layer having a thickness of 100 µm.

The mole ratio of ZnS to SiO₂ in the mixture of ZnS and SiO₂ contained in the first dielectric layer and the second dielectric layer was 80:20.

### Working Example 12

An optical recording medium was fabricated in the manner of Working Example 11, except that Zn was added to the second recording layer instead of Al.

### Working Example 13

An optical recording medium was fabricated in the manner of Working Example 11, except that Mg was added to the second recording layer instead of Al.

### Working Example 14

An optical recording medium was fabricated in the manner of Working Example 11, except that Au was added to the second recording layer instead of Al.

### Working Example 15

An optical recording medium was fabricated similarly to Working Example 11 except that Si was added to the second recording layer instead of Al.

### Working Example 16

An optical recording medium was fabricated in the manner of Working Example 11, except that Al and Au were added to the second recording layer.

Information was optically recorded in each of the optical recording media fabricated in accordance with Working Example 11 to Working Example 16 by the same method as described above and the noise level immediately after recording of information and the reflection coefficient of an unrecorded region were measured.

Then, each of the optical recording media fabricated in accordance with Working Example 11 to Working Example 16 was subjected to a storage test in which it was held at a temperature of 80 °C and relative humidity of 85 % for 50 hours. Following this test, the noise level and reflection coefficient of an unrecorded region were again measured and the rate of reflection coefficient reduction was calculated.

The measurement and calculation results are shown in Tables 4 to 9.

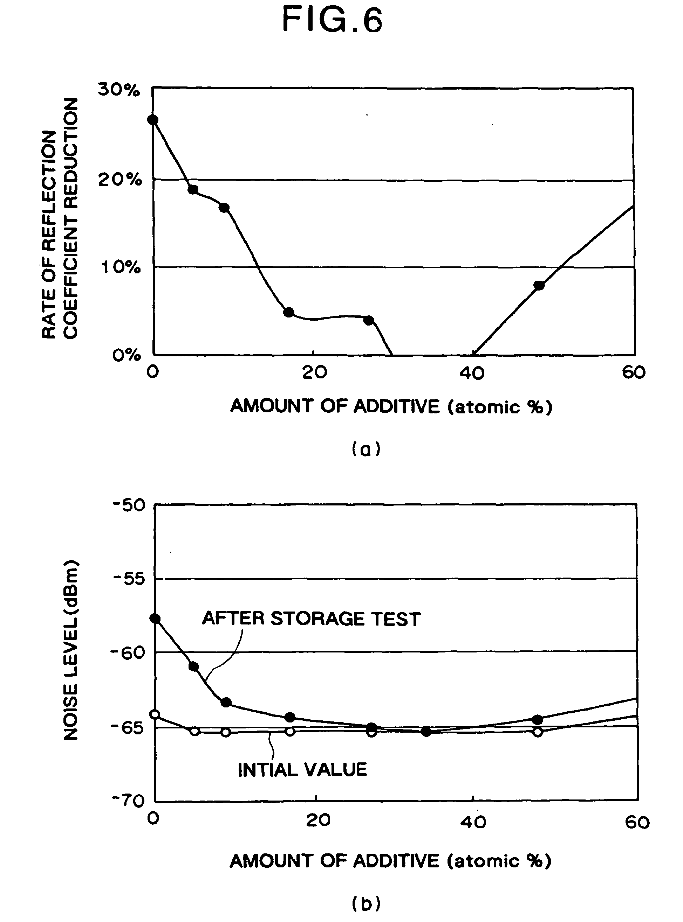

Figures 6 to 10 correspond to Tables 4 to 9. The graphs of Figures 6 (a), 7 (a), 8 (a), 9 (a) and 10 (a) show how rate of reflection coefficient reduction varies with amount of additive and the graphs of Figures 6 (b), 7 (b), 8 (b), 9 (b) and 10 (b) show how noise level immediately after recording of information and after the storage test vary with amount of additive.

Since the second recording layer contains Cu as a primary component in the present invention, the data for amounts of additive exceeding 50 atomic % are shown only for reference in Tables 4 to 9 and Figures 6 to 10.

**TABLE 4**

| Amount of additive (atomic%) | | 5 | 9 | 17 | 27 | 34 | 48 | 66 |
|---|---|---|---|---|---|---|---|---|
| Rate of reflection coefficient reduction | | 19% | 17% | 5% | 4% | -4% | 8% | 22% |
| Noise level (dBm) | Initial value | -65.2 | -65.3 | -65.3 | -65.3 | -65.3 | -65.3 | .63.8 |
| | After storage test | -60.9 | -63.3 | -64.4 | -65.0 | -65.3 | -64.5 | -62.6 |
| Appearance | | Bad | Good | Good | Good | Good | Good | Good |

**TABLE 5**

| Amount of additive (atomic%) | | 2 | 5 | 23 | 32 | 38 | 43 | 64 |
|---|---|---|---|---|---|---|---|---|
| Rate of reflection coefficient reduction | | 27% | 27% | 26% | 25%, | 23% | 23% | 18% |
| Noise level (dBm) | Initial value | -64.9 | -65.0 | -65.0 | -64.5 | -64.2 | -64.4 | -60.1 |
| | After storage test | -58.7 | -59.7 | -63.6 | -63.6 | -63.4 | -62.8 | -58.5 |
| Appearance | | Good | Good | Good | Good | Good | Good | Good |

**TABLE 6**

| Amount of additive (atomic%) | | 5 | 10 | 21 | 39 | 58 |
|---|---|---|---|---|---|---|
| Rate of reflection coefficient reduction | | 21 % | 13% | 2% | 3% | 6% |
| Noise level (dBm) | Initial value | -64.5 | -65.2 | -64.4 | -64.8 | -65.3 |
| | After storage test | -63.6 | -64.8 | -63.3 | -63.9 | -63.5 |
| Appearance | | Bad | Good | Good | Good | Good |

**TABLE 7**

| Amount of additive (atomic%) | | 5 | 13 | 28 | 45 | 64 |
|---|---|---|---|---|---|---|
| Rate of reflection coefficient reduction | | 17% | 15% | 12% | 19% | 14% |
| Noise level (dBm) | Initial value | -64.3 | -64.6 | -64.9 | -64.7 | -65.2 |
| | After storage test | -61.2 | -62.3 | -62.7 | -63.1 | -63.9 |
| Appearance | | Good | Good | Good | Good | Good |

**TABLE 8**

| Amount of additive (atomic%) | | 2 | 7 | 18 | 32 | 45 |
|---|---|---|---|---|---|---|
| Rate of reflection coefficient reduction | | 17% | 12% | 9% | 2% | 4% |
| Noise level (dBm) | Initial value | -64.3 | -64.6 | -64.5 | -64.7 | -64.1 |
| | After storage test | -61.2 | -62.3 | -63.1 | -63.2 | -61.1 |
| Appearance | | Good | Good | Good | Good | Good |

**TABLE 9**

| Amount of additive (atomic%) | Al | 17 | 24 | 23 |
|---|---|---|---|---|
| | Au | 0 | 6 | 13 |
| Rate of reflection coefficient reduction | | 5% | 9% | 2% |
| Noise level (dBm) | Initial value | -65.3 | -65.8. | -65.8 |
| | After storage test | -64.4 | -65.6 | -65.6 |
| Appearance | | Good | Good | Good |
| Recording sensitivity (mW) | | 6.6 | 5 | 4.9 |

As apparent from Table 4 and Figures 6 (a) and 6 (b), it was found that when Al was added to the second recording layer containing Cu as a primary component so that the amount thereof was equal to or more than 5 atomic %, increase in noise level and decrease in reflection coefficient after storage test were suppressed. However, it was found that when the amount of Al added to the second recording layer was excessive, initial noise level after recording information increased and rate of reflection coefficient reduction increased. Furthermore, when the amount of Al added to the second recording layer was equal to or more than 9 atomic %, increase in noise level and reflection coefficient were suppressed and, in addition, no peeling of the second recording layer containing Cu as a primary component occurred.

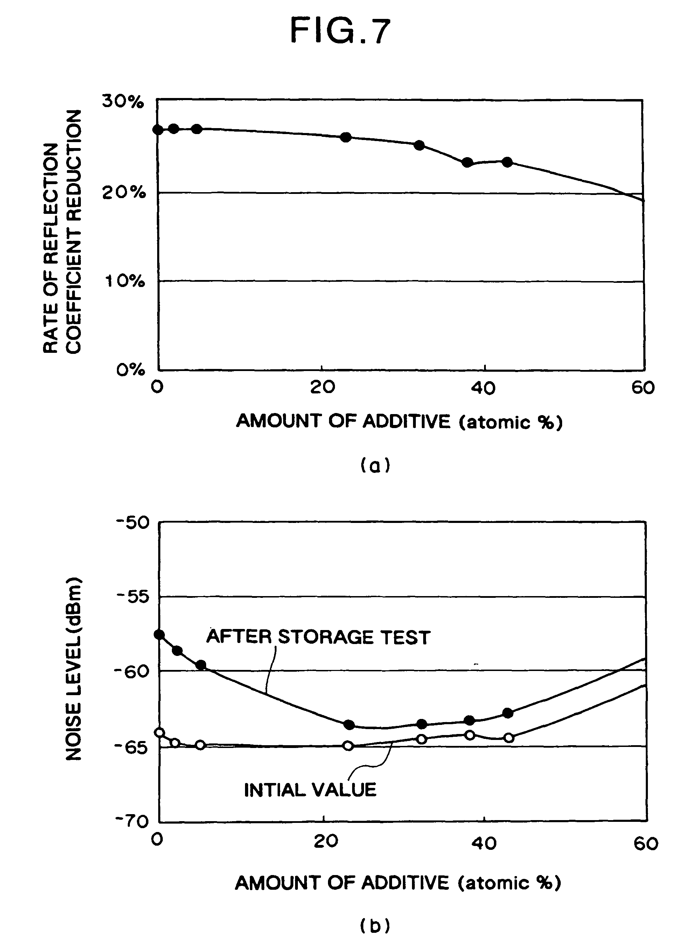

Further, as apparent from Table 5 and Figures 7 (a) and 7 (b), it was found that when Zn was added to the second recording layer containing Cu as a primary component so that the amount thereof was equal to or more than 2 atomic %, increase in noise level and decrease in reflection coefficient after storage test were suppressed. However, it was found that when the amount of Zn added to the second recording layer was excessive, initial noise level after recording information increased. Furthermore, when the amount of Zn added to the second recording layer was equal to or more than 2 atomic %, increase in noise level and reflection coefficient reduction were suppressed and, in addition, no peeling of the second recording layer containing Cu as a primary component occurred.

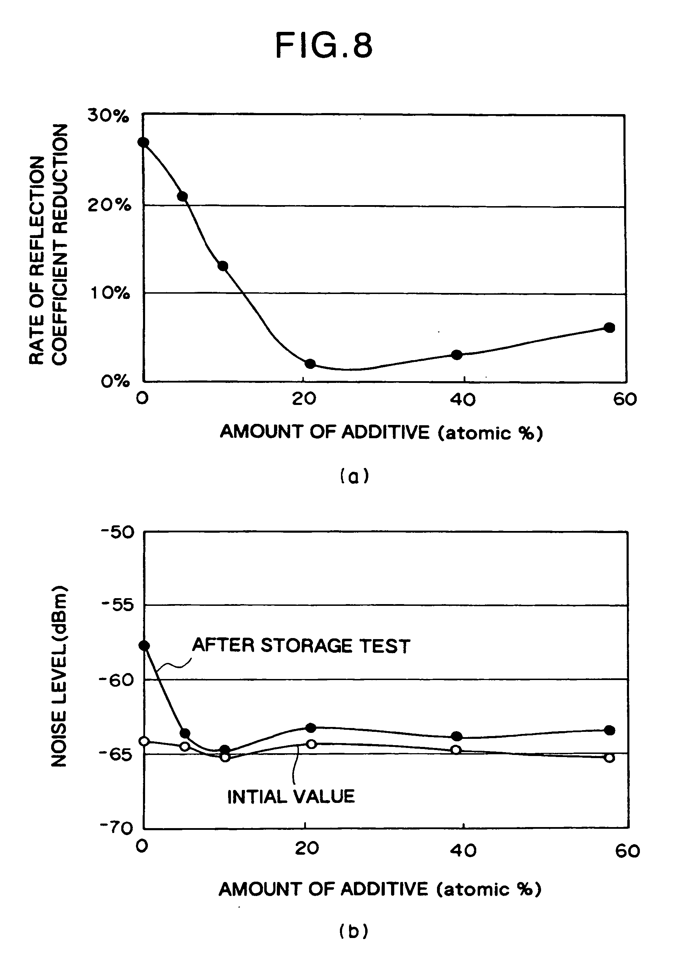

Moreover, as apparent from Table 6 and Figures 8 (a) and 8 (b), it was found that when Mg was added to the second recording layer containing Cu as a primary component so that the amount thereof was equal to or more than 5 atomic %, increase in noise level and decrease in reflection coefficient after storage test were suppressed. However, it was found that when the amount of Mg added to the second recording layer was increased to an excessive level, recording sensitivity rapidly degenerated. Since the power of the laser beam therefore had to be increased, recording of information became difficult. Furthermore, when the amount of Mg added to the second recording layer was equal to or more than 10 atomic %, increase in noise level and reflection coefficient reduction were suppressed and, in addition, no peeling of the second recording layer containing Cu as a primary component occurred.

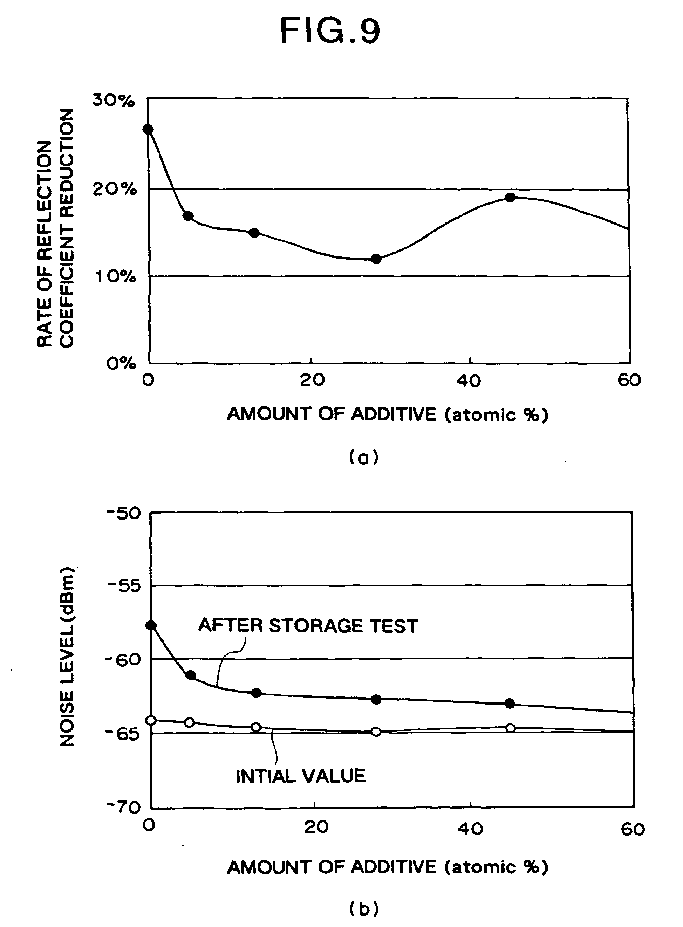

Further, as apparent from Table 7 and Figures 9 (a) and 9 (b), it was found that when Au was added to the second recording layer containing Cu as a primary component so that the amount thereof was equal to or more than 5 atomic %, increase of noise level and decrease in reflection coefficient after storage test were suppressed. However, it was found that the effect obtained by adding Au was substantially saturated if only a small amount of Au was added. Furthermore, when the amount of Au added to the second recording layer was equal to or more than 5 atomic %, increase in noise level and reflection coefficient reduction were suppressed and, in addition, no peeling of the second recording layer containing Cu as a primary component occurred.

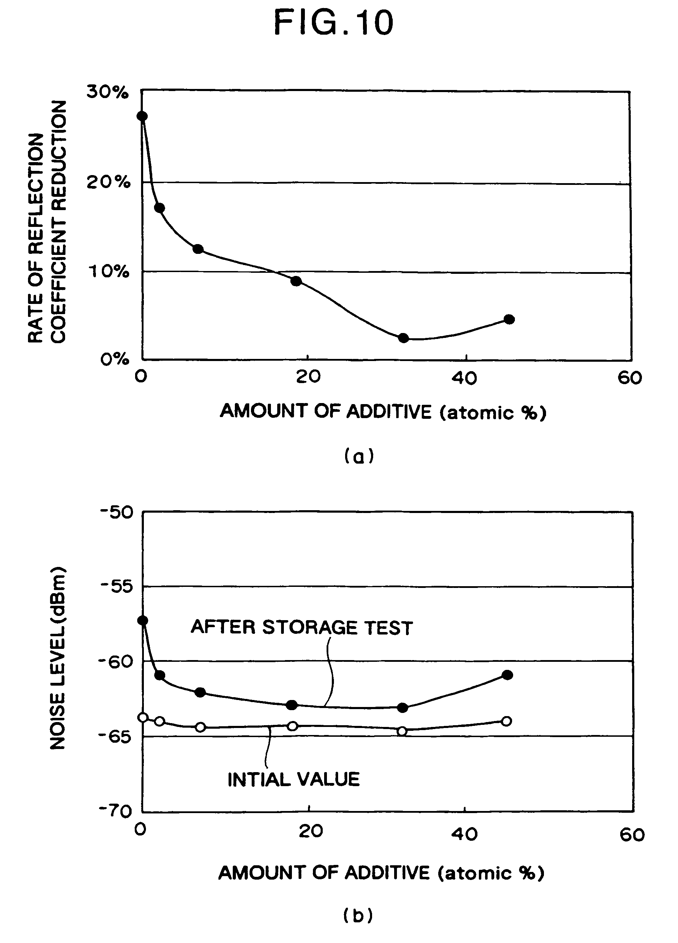

Moreover, as apparent from Table 8 and Figures 10 (a) and 10 (b), it was found that when Si was added to the second recording layer containing Cu as a primary component so that the amount thereof was equal to or more than 2 atomic %, increase in noise level and decrease in reflection coefficient after storage test were suppressed. However, it was found that when the amount of Si added to the second recording layer was excessive, C/N ratio decreased. Furthermore, when the amount of Si added to the second recording layer was equal to or more than 2 atomic %, increase in noise level and reflection coefficient reduction were suppressed and, addition, no peeling of the second recording layer containing Cu as a primary component occurred.

Further, as apparent from Table 9, it was found that when Al and Au were added to the second recording layer containing Cu as a primary component, increase in noise level and decrease in reflection coefficient after storage test were suppressed. Moreover, no peeling of the second recording layer containing Cu as a primary component occurred. Furthermore, it was found that the recording sensitivity was improved in comparison with the case where only Al was added to the second recording layer.

Working Examples 11 to 16 therefore demonstrate that by adding Al, Zn, Mg, Au, Si or Al and Au to the second recording layer containing Cu as a primary component noise level increase and rate of reflection coefficient reduction can be suppressed and peeling of the second recording layer containing Cu as a primary component can be prevented even when the optical recording medium is held under a severe environment for a long time.

The present invention has thus been shown and described with reference to specific embodiments and working examples. However, it should be noted that the present invention is in no way limited to the details of the described arrangements but changes and modifications may be made without departing from the scope of the appended claims.

For example, although the first recording layer 11 and the second recording layer 12 are formed in contact with each other in the above described embodiments and working examples, it is not absolutely necessary to form the first recording layer 11 and the second recording layer 12 in contact with each other but it is sufficient for the second recording layer 12 to be so located in the vicinity of the first recording layer 11 as to enable formation of a mixed region including the primary component element of the first recording layer 11 and the primary component element of the second recording layer 12 when the region is irradiated with a laser beam. Further, one or more other layers such as a dielectric layer may be interposed between the first recording layer 11 and the second recording layer 12.

Furthermore, although the optical recording medium 1, 2, 3, 4 in the above described embodiments and working examples includes the first recording layer 11 and the second recording layer 12, the optical recording medium may include one or more recording layers containing an element selected from Si, Sn, Mg, In, Zn, Bi and Al as a primary component or one or more recording layers containing Cu as a primary element, in addition to the first recording layer and the second recording layer.

Moreover, although the first recording layer 11 is disposed on the side of the protective layer 30 and the second recording layer 12 is disposed on the side of the substrate 40 in the above described embodiments and working examples, it is possible to dispose the first recording layer on the side of the substrate 40 and the second recording layer on the side of the protective layer 30.

According to the present invention, it is possible to provide an optical recording medium which can be fabricated using materials that apply only light load to the environment and in which information can be recorded with high sensitivity and from which information can be reproduced with high sensitivity.

Further, according to the present invention, it is possible to provide an optical recording medium which includes a recording layer having excellent surface smoothness and whose characteristics can be improved when information is recorded by a laser beam having a reduced spot diameter and when information is reproduced by a laser beam having a reduced spot diameter.

Furthermore, according to the present invention, it is possible to provide an optical recording medium which can suppress noise level increase and rate of reflection coefficient reduction and prevent the second recording layer containing Cu as a primary component from peeling even when the optical medium is held under a severe environment for a long time.

Moreover, according to the present invention, it is possible to provide a method for optically recording information in an optical recording medium with high sensitivity.

## Claims

1. An optical recording medium comprising in this order
i) a substrate (40),
ii) a second dielectric layer (22),
iii) in either order
a first recording layer (11) containing as the primary component an element selected from Si, Sn, Mg, In, Zn, Bi and Al, and
a second recording layer (12) located in the vicinity of the first recording layer, containing Cu as the primary component,
iv) a first dielectric layer (21),
v) a protective layer (30).

2. Optical recording medium of Claim 1, wherein the second recording layer (12) is in contact with the first recording layer (11).

3. Optical recording medium of Claim 1 or 2, wherein the primary component of the first recording layer (11) is selected from Si, Mg, A1 and Sn.

4. Optical recording medium of any of claims 1-3, wherein the second recording layer (12) further comprises at least one element selected from A1, Si, Zn, Mg, Au, Sn, Ge, Ag, P, Cr, Fe and Ti.

5. Optical recording medium of Claim 4, wherein the at least one element is selected from Al, Zn, Sn and Au.

6. Optical recording medium of any of Claims 1-5; wherein
- the first recording layer (11) is disposed on the side of the protective layer (30), and
- the second recording layer (12) is disposed on the side of the substrate (40).

7. Optical recording medium of Claim 6, wherein
- the protective layer (30) has light transmittance ability.

8. Optical recording medium of Claim 7, which further comprises a reflective layer (50) between the substate (40) and the second dielectric layer (22).

9. Optical recording medium of any of Claims 1-5, wherein
- the substrate (40) has light transmittance ability
- the first recording layer (11) is disposed on the side of the substrate (40), and
- the second recording layer (12) is disposed on the side of the protective layer (30).

10. Optical recording medium of Claim 9, which further comprises a reflective layer (50) between the protective layer (30) and the first dielectric layer (21).

11. Optical recording medium of any of Claims 1-9, which is a write-once type optical recording medium.

12. A method for optically recording information in an optical recording medium as defined in any of the claims 1-11, which comprises the step of irradiating via one of the substrate (40) and the protective layer (30) the first and the second recording layers (11, 12) with a laser beam having a predetermined power, thereby forming a region where the elements contained as the primary component in the first and the second recording layer, respectively, are mixed.

## Patentansprüche

1. Optisches Aufzeichnungsmedium, das in dieser Reihenfolge umfaßt:
i) ein Substrat (40),
ii) eine zweite dielektrische Schicht (22),
iii) in beliebiger Reihenfolge
eine erste Aufzeichnungsschicht (11), die als Hauptkomponente ein Element enthält, das aus Si, Sn, Mg, In, Zn, Bi und Al ausgewählt ist, und
eine zweite Aufzeichnungsschicht (12), die sich benachbart zur ersten Aufzeichnungsschicht befindet und Cu als Hauptkomponente enthält,
iv) eine erste dielektrische Schicht (21),
v) eine Schutzschicht (30).

2. Optisches Aufzeichnungsmedium gemäß Anspruch 1, worin die zweite Aufzeichnungsschicht (12) in Kontakt mit der ersten Aufzeichnungsschicht (11) ist.

3. Optisches Aufzeichnungsmedium gemäß Anspruch 1 oder 2, worin die Hauptkomponente der ersten Aufzeichnungsschicht (11) aus Si, Mg, Al und Sn ausgewählt ist.

4. Optisches Aufzeichnungsmedium gemäß einem der Ansprüche 1 bis 3, worin die zweite Aufzeichnungsschicht (12) ferner wenigstens ein Element umfaßt, das aus Al, Si, Zn, Mg, Au, Sn, Ge, Ag, P, Cr, Fe und Ti ausgewählt ist.

5. Optisches Aufzeichnungsmedium gemäß Anspruch 4, worin das wenigstens eine Element aus Al, Zn, Sn und Au ausgewählt ist.

6. Optisches Aufzeichnungsmedium gemäß einem der Ansprüche 1 bis 5, worin
- die erste Aufzeichnungsschicht (11) auf der Seite der Schutzschicht (30) angeordnet ist und
- die zweite Aufzeichnungsschicht (12) auf der Seite des Substrats (40) angeordnet ist.

7. Optisches Aufzeichnungsmedium gemäß Anspruch 6, worin
- die Schutzschicht (30) Lichtdurchlässigkeit besitzt.

8. Optisches Aufzeichnungsmedium gemäß Anspruch 7, das ferner eine reflektierende Schicht (50) zwischen dem Substrat (40) und der zweiten dielektrischen Schicht (22) umfaßt.

9. Optisches Aufzeichnungsmedium gemäß einem der Ansprüche 1 bis 5, worin
- das Substrat (40) Lichtdurchlässigkeit besitzt,
- die erste Aufzeichnungsschicht (11) auf der Seite des Substrats (40) angeordnet ist, und
- die zweite Aufzeichnungsschicht (12) auf der Seite der Schutzschicht (30) angeordnet ist.

10. Optisches Aufzeichnungsmedium gemäß Anspruch 9, das ferner eine reflektierende Schicht (50) zwischen der Schutzschicht (30) und der ersten dielektrischen Schicht (21) umfaßt.

11. Optisches Aufzeichnungsmedium gemäß einem der Ansprüche 1 bis 9, das ein optisches Aufzeichnungsmedium vom einmal beschreibbaren Typ ist.

12. Verfahren zur optischen Aufzeichnung von Informationen in einem optischen Aufzeichnungsmedium wie in einem der Ansprüche 1 bis 11 definiert, das den Schritt der Bestrahlung der ersten und zweiten Aufzeichnungsschichten (11, 12) über eines aus dem Substrat (40) und der Schutzschicht (30) mit einem Laserstrahl mit einer vorgegebenen Leistung umfaßt, wodurch eine Region gebildet wird, in der die Elemente, die als die Hauptkomponente in der ersten bzw. der zweiten Aufzeichnungsschicht enthalten sind, vermischt werden.

## Revendications

1. Support d'enregistrement optique comprenant dans cet ordre :
i) un substrat (40),
ii) une seconde couche diélectrique (22),
iii) dans un ordre quelconque
une première couche d'enregistrement (11) contenant, comme composant principal, un élément sélectionné parmi Si, Sn, Mg, In, Zn, Bi et Al, et
une seconde couche d'enregistrement (12) située au voisinage de la première couche d'enregistrement, contenant du Cu comme composant principal,
iv) une première couche diélectrique (21),
v) une couche protectrice (30).

2. Support d'enregistrement optique selon la revendication 1, dans lequel la seconde couche d'enregistrement (12) est en contact avec la première couche d'enregistrement (11).

3. Support d'enregistrement optique selon la revendication 1 ou 2, dans lequel le composant principal de la première couche d'enregistrement (11) est sélectionné parmi Si, Mg, Al et Sn.

4. Support d'enregistrement optique selon l'une quelconque des revendications 1 à 3, dans lequel la seconde couche d'enregistrement (12) comprend en outre au moins un élément sélectionné parmi Al, Si, Zn, Mg, Au, Sn, Ge, Ag, P, Cr, Fe et Ti.

5. Support d'enregistrement optique selon la revendication 4, dans lequel l'au moins un élément est sélectionné parmi Al, Zn, Sn et Au.

6. Support d'enregistrement optique selon l'une quelconque des revendications 1 à 5, dans lequel
- la première couche d'enregistrement (11) est disposée du côté de la couche protectrice (30), et
- la seconde couche d'enregistrement (12) est disposée du côté du substrat (40).

7. Support d'enregistrement optique selon la revendication 6, dans lequel
- la couche protectrice (30) a une capacité de transmission de la lumière.

8. Support d'enregistrement optique selon la revendication 7, qui comprend en outre une couche réfléchissante (50) entre le substrat (40) et la seconde couche diélectrique (22).

9. Support d'enregistrement optique selon l'une quelconque des revendications 1 à 5, dans lequel
- le substrat (40) a une capacité de transmission de lumière,
- la première couche d'enregistrement (11) est disposée du côté du substrat (40), et
- la seconde couche d'enregistrement (12) est disposée du côté de la couche protectrice (30).

10. Support d'enregistrement optique selon la revendication 9, qui comprend en outre une couche réfléchissante (50) entre la couche protectrice (30) et la première couche diélectrique (21).

11. Support d'enregistrement optique selon l'une quelconque des revendications 1 à 9, qui est un support d'enregistrement optique du type inscriptible une seule fois.

12. Procédé pour renregistrer des informations de façon optique dans un support d'enregistrement optique tel que défini dans l'une quelconque des revendications 1 à 11, qui comprend l'étape consistant à soumettre à un rayonnement, via l'un du substrat (40) et de la couche protectrice (30), la première et la seconde couche d'enregistrement (11, 12) avec un faisceau laser ayant une puissance prédéterminée, formant ainsi une région où les éléments contenus comme composant principal respectivement dans la première et la seconde couche d'enregistrement sont mélangés.
